# EUROPÄISCHE PATENTSCHRIFT

(11) **EP 2 786 897 B1**
(45) Veröffentlichungstag und Bekanntmachung des Hinweises auf die Patenterteilung: **27.10.2021**
(21) Anmeldenummer: 14163405.5
(22) Anmeldetag: 03.04.2014
(51) Int. Cl.: B60Q 1/068

(54) **Fahrzeugscheinwerfer mit einer Verstelleinrichtung**
Vehicle headlamp with an adjustment device
Phare de véhicule avec un dispositif de réglage

(30) Priorität: 04.04.2013 AT 502312013
(43) Veröffentlichungstag der Anmeldung: 08.10.2014
(73) Patentinhaber: ZKW Group GmbH, 3250 Wieselburg (AT)
(72) Erfinder: Schadenhofer, Peter, 3382 Roggendorf (AT)
(74) Vertreter: Patentanwaltskanzlei Matschnig & Forsthuber OG

(56) Entgegenhaltungen:
- EP-A1- 1 405 762
- DE-A1- 3 445 703
- DE-A1- 3 728 121
- DE-A1-102010 022 847

## Beschreibung

Die Erfindung betrifft einen Fahrzeugscheinwerfer mit einer Verstelleinrichtung zum Verstellen, beispielsweise zum Verschwenken von zumindest einer optisch relevanten Baueinheit eines Kraftfahrzeugscheinwerfer, welche optisch relevante Baueinheit beispielsweise eine Leuchteinheit bzw. ein Lichtmodul ist oder zumindest eine Leuchteinheit oder ein Lichtmodul umfasst, und wobei die Verstelleinrichtung ein Stellelement und eine Antriebsvorrichtung umfasst, wobei das Stellelement mit einem ersten Endbereich gelenkig mit der optischen Baueinheit verbunden ist, und wobei an seinem zweiten Endbereich das Stellelement mit der Antriebsvorrichtung gekoppelt ist, derart, dass das Stellelement mittels der Antriebsvorrichtung um seine Längsachse verdrehbar und entlang seiner Längsachse längsverschiebbar gelagert ist, wobei das Stellelement einen Gewindeabschnitt aufweist, mittels welchem das Stellelement in einem Gegengewinde um seine Längsachse verdrehbar gelagert ist, wobei das Gegengewinde in Bezug auf ein Gehäuse des Fahrzeugscheinwerfers feststehend angeordnet ist, wobei die Antriebsvorrichtung an dem Gehäuse des Fahrzeugscheinwerfers gelagert ist, wobei die Verstelleinrichtung ein von dem Gehäuse des Fahrzeugscheinwerfers getrennt ausgebildetes Führungselement umfasst, wobei das Führungselement mit dem Gehäuse fix verbunden ist, und wobei das Gegengewinde mit dem Führungselement fest verbunden ist.

Ein solcher Fahrzeugscheinwerfer ist aus DE 34 45 703 A1 bekannt.

Zur gesetzeskonformen Einstellung des mit einem Scheinwerfer erzeugten Lichtbildes ist es notwendig, dass ein oder mehrere optisch relevante Baueinheiten des Scheinwerfers in Höhenrichtung und/oder seitlich einstellbar sind. Bei einer solchen optisch relevanten Baueinheit handelt es sich beispielsweise um ein Lichtmodul, etwa bestehend aus Lichtquellen(n), Reflektor, Linse etc., es kann sich aber auch um einzelne Bauteile wie Reflektoren, Linsen etc. handeln, die entsprechend verstellt werden.

Häufig ist dabei die zumindest eine optisch relevante Baueinheit um eine oder mehrere Achsen, beispielsweise um eine horizontale und/oder eine vertikale Achse verschwenkbar in dem Scheinwerfer gelagert. Beispielsweise sind ein oder mehrere Lichtmodule an einem Tragrahmen gelagert, und der Tragrahmen ist um eine oder zwei Achsen wie vorstehend beschrieben verschwenkbar gelagert.

Zur Verstellung ist in der Regel zumindest eine Antriebsvorrichtung vorgesehen, wobei die Antriebsvorrichtung üblicherweise manuell betätigbar ist, beispielsweise umfasst die Antriebsvorrichtung ein Drehrad (eine Einstellschraube), dessen Drehbewegung über eine geeignete Mechanik in eine Linearbewegung eines Gleitelementes umgesetzt wird, welches in entsprechenden Gleitbahnen in dem Scheinwerfergehäuse verschiebbar geführt ist. Ein Verstellpunkt der optisch relevanten Baueinheit, z.B. des Tragrahmens, an welchem die Baueinheit angebracht ist, ist in dem Gleitelement gelagert, sodass bei einem Verschieben des Gleitelementes die Baueinheit bzw. der Tragrahmen verschwenkt wird.

Da das Gleitelement dazu geeignet sein muss, die bei Vibrationen im Fahrbetrieb auftretenden Kräfte aufnehmen zu können, ist die Materialauswahl für das Gleitelement eingeschränkt. Das Anbringen der Gleitbahnen an dem Scheinwerfergehäuse ist werkzeugtechnisch aufwändig. Weiters ist von Nachteil, dass durch das Anbringen der Gleitbahnen an dem Scheinwerfergehäuse auch die Toleranzen des Gehäuses in die Gesamttoleranz einfließen.

Es ist eine Aufgabe der Erfindung, einen Fahrzeugscheinwerfer mit einer Verstelleinrichtung zu schaffen, die einen einfachen Aufbau aufweist.

Weiters ist es eine Aufgabe der Erfindung, einen Fahrzeugscheinwerfer mit einer Verstelleinrichtung zu schaffen, bei welcher die Toleranzen des Scheinwerfergehäuses vernachlässigt werden können bzw. auf die Toleranzen der Verstelleinrichtung keinen Einfluss haben.

Diese Aufgabe wird mit einer eingangs erwähnten Verstelleinrichtung dadurch gelöst, dass erfindungsgemäß das Führungselement eine Führungsaufnahme aufweist, in welcher Führungsaufnahme die zumindest eine optisch relevante Baueinheit mit einem Lagerbereich in Richtung der Längsachse des Stellelementes verschiebbar gelagert ist, und wobei der Lagerbereich einen Gelenksabschnitt aufweist, mit welchem das Stellelement mit seinem ersten Endbereich gelenkig verbunden ist.

Durch die Verwendung eines Führungselementes, welches von dem Gehäuse des Scheinwerfers getrennt und mit diesem verbindbar ausgebildet ist, fällt das Gehäuse aus der Toleranzkette heraus. Das Führungselement wird mit dem Gehäuse verbunden, beispielsweise angeschraubt, und Stellelement und Lagerbereich der optisch relevanten Baueinheit können optimal zueinander positioniert werden, Reibungskräfte können entsprechend bei der Verstellbewegung gering gehalten werden.

Außerdem ist es möglich, dass direkt in der Achse des Verstellpunktes, d.h. direkt in dem Verstellpunkt angedrückt wird. Dies hat einerseits den Vorteil, dass die erfindungsgemäße Einrichtung platzsparend aufgebaut werden, andererseits aber insbesondere den Vorteil, dass keine Verkippungen des Lagerbereiches in Bezug auf das Führungselement auftreten können, sodass es auch zu keinem Verklemmen oder einem "Verspießen" kommen kann.

Bei Verwendung eines Gleitelements hingegen greift die von der Antriebsvorrichtung erzeugte lineare Stellkraft an dem Gleitelement meist nicht in einer Ebene mit der gedachten Verstellachse an, sonder konstruktiv bedingt etwas außerhalb, was zum Auftreten eines Kippmoments am Gleitelement führt, da dieses ja die Kraft in die Ebene der Achse übertragen muss. Selbst wenn es gelingt, das Gleitelement konstruktiv so zu positionieren, dass die Kraft auf das Gleitelement in derselben Ebene angreift, in welcher die Verstellachse liegt, treten durch Fertigungstoleranzen, Federelemente die diese ausgleichen sollen, ungünstige Werkstoffpaarungen und die im Gegensatz zu der Lagerstelle der vorliegenden Erfindung relativ großen Auflagefläche unerwünschte Kräfte und damit Kippmomente auf - es kommt zu einem "Verspießen" des Gleitelementes.

Durch die Ausgestaltung des Führungselementes als vom Gehäuse getrenntes Bauteil ist auch die Materialauswahl für dieses Bauteil sowie für das Gehäuse des Scheinwerfers nicht eingeschränkt, d.h. die Materialpaarung zwischen Führungselement und dem darin verschieblichen Lagerbereich ist flexibel wählbar. Weiters kann die Komplexität der (Kunststoff-)Werkzeuge, insbesondere des Werkzeugs zur Fertigung des Gehäuses deutlich reduziert werden.

Bei einer konkreten Ausführungsform der Erfindung ist vorgesehen, dass der Lagerbereich mit einem Außenbereich des Gelenksabschnittes in der Führungsaufnahme verschiebbar gelagert ist.

Außerdem ist mit Vorteil vorgesehen, dass das Gegengewinde mit dem Führungselement einstückig ausgebildet ist.

Dadurch, dass das die Axialbewegung des Stellelementes erzeugende Gegengewinde an dem Führungselement gelagert, vorzugsweise mit diesem einstückig ausgebildet ist, fällt das Gehäuse aus der Toleranzkette heraus.

Zweckmäßiger Weise ist vorgesehen, dass der Lagerbereich als von der optischen Baueinheit getrenntes Lagerelement ausgebildet ist, welches mit der optischen Baueinheit fix verbindbar bzw. fix verbunden ist.

Üblicherweise erfolgt dabei eine Verbindung des Lagerelementes nicht direkt mit der optisch relevanten Baueinheit, sondern die Baueinheit ist in einem Tragrahmen angeordnet, welcher Tragrahmen um eine Achse verschwenkbar gelagert ist. Das Lagerelement ist mit diesem Tragrahmen verbunden, z.B. verschraubt.

Üblicherweise ist das Stellelement als Stellstange ausgebildet.

Weiters ist es von Vorteil, wenn das Gegengewinde elastisch, vorzugsweise zumindest in Richtung quer zu der Längsachse elastisch ausgebildet ist.

Auf diese Weise kann die lineare Stellkraft begrenzt werden. Wird das auftretende Drehmoment zu hoch, so gibt das elastische Gegengewinde nach.

Bei einer konkreten Ausführungsform ist außerdem vorgesehen, dass der erste Endbereich als Kugelkopf ausgebildet ist, und der Gelenksabschnitt des Lagerbereiches eine kugelförmige Aufnahme, an die Form des Kugelkopfes des ersten Endbereiches angepasste Form aufweist, und der erste Endbereich in die kugelförmige Aufnahme eingesetzt, beispielsweise in der Aufnahme gelenkig verrastet ist.

Um ein optimales Gleiten mit geringer Reibung zu ermöglichen, ist weiters auch noch vorgesehen, dass die Führungsaufnahme ein oder mehrere Gleitflächen aufweist, an welchen der Lagerbereich, vorzugsweise der Außenbereich des Gelenksabschnittes gleitend gelagert ist.

Insbesondere ist vorgesehen, dass zumindest zwei Gleitflächen, eine Gleitfläche an einem oberen Bereich in der Führungsaufnahme und eine Gleitfläche an einem unteren Bereich in der Führungsaufnahme, vorgesehen sind.

Mit diesen Gleitflächen erfolgt eine Lagerung des Lagerbereiches und somit der optisch relevanten Baueinheit in z-Richtung, d.h. in vertikaler Richtung.

Wenn die Verstelleinrichtung zum Einstellen einer Grundeinstellung der optisch relevanten Baueinheit vorgesehen ist, dann ist vorzugsweise vorgesehen, dass die Antriebsvorrichtung manuell betätigbar ist.

Die eingangs genannten Aufgaben werden weiters gelöst mit einem Fahrzeugscheinwerfer mit einer oben beschriebenen erfindungsgemäßen Verstelleinrichtung, wobei die zumindest eine optisch relevante Baueinheit in einem Tragrahmen angeordnet ist, welcher Tragrahmen um eine Verschwenkachse verschwenkbar gelagert ist, und wobei der Lagerbereich mit dem Tragrahmen außerhalb der Verschwenkachse fix verbunden oder mit diesem einstückig ausgebildet ist.

Dabei kann vorgesehen sein, dass an dem Tragrahmen zwei oder mehrere optische relevante Baueinheiten angeordnet sind, sodass zwei oder mehrere Baueinheit in einem Einstellvorgang eingestellt werden können.

Bei einer konkreten Ausführungsform ist vorgesehen, dass die zumindest eine optisch relevante Baueinheit als Leuchteinheit bzw. Lichtmodul ausgebildet ist.

Im Folgenden ist die Erfindung an Hand der Zeichnung an einer beispielhaften Ausführungsform näher erörtert. In dieser zeigt
Fig. 1 einen perspektivischen Schnitt durch einen erfindungsgemäßen Fahrzeugscheinwerfer im Bereich der Verstelleinrichtung,
Fig. 2 einen Vertikalschnitt durch den Scheinwerfer im Bereich der Verstelleinrichtung,
Fig. 3 eine Explosionsdarstellung im Bereich des Stellementes, und
Fig. 4 einen Tragrahmen für ein Lichtmodul des Fahrzeugscheinwerfers.

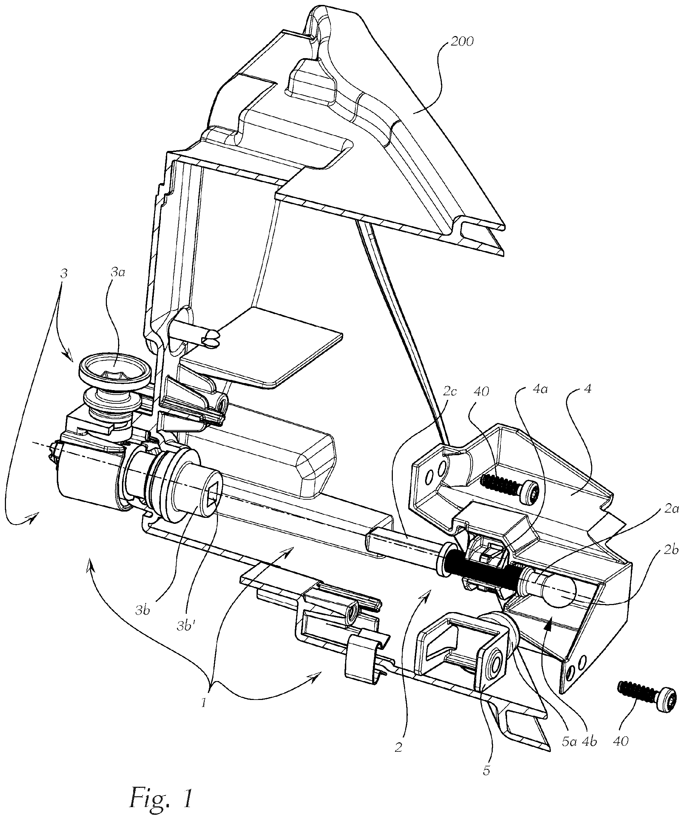

Figur 1 zeigt einen Ausschnitt eines Fahrzeugscheinwerfers im Bereich einer Verstelleinrichtung 1 zum Verstellen, insbesondere zum Verschwenken einer optisch relevanten Baueinheit des Fahrzeugscheinwerfers.

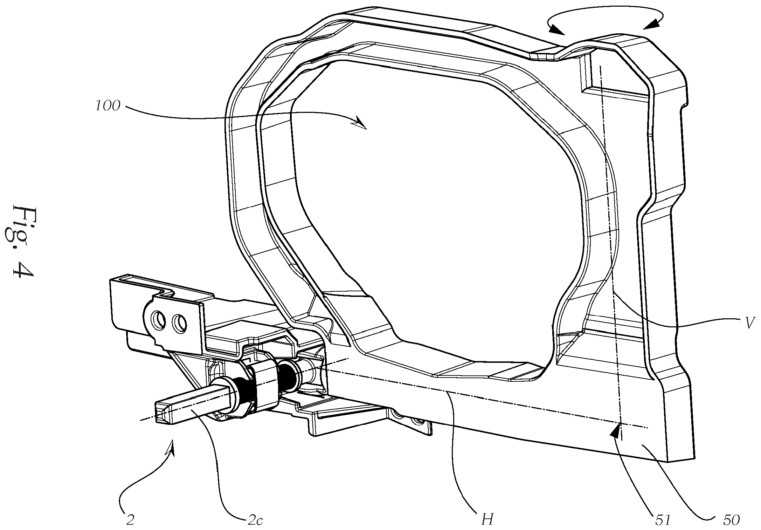

Bei der gezeigten Ausführungsform handelt es sich bei der optisch relevanten Baueinheit 100 um eine nicht dargestellte Beleuchtungsvorrichtung bzw. um ein nicht dargestelltes Lichtmodul. Eine solche Leuchteinheit bzw. ein solches Lichtmodul besteht typischerweise aus einer Baugruppe umfassend ein oder mehrere Lichtquellen, einen oder mehrere Licht formende Elemente, wie etwa einen Reflektor, Linse, Blende etc. In Figur 4 ist diese nicht dargestellte optisch relevante Baueinheit mit dem Bezugszeichen "100" angedeutet.

Grundsätzlich kann es sich bei der optisch relevanten Baueinheit aber auch um einen Einzelteil eines Fahrzeugscheinwerfers oder einer Leuchteinheit, etwa um einen Reflektor, eine Linse, eine Lichtquelle, Blendenanordnung etc. handeln, oder die optisch relevante Baueinheit umfasst ein oder mehrere solcher Bauteile oder ein oder mehrere Leuchteinheiten auf einem gemeinsamen Träger, welcher Träger verschwenkbar ist.

Im Folgenden wird der Einfachheit halber von (genau) einem Lichtmodul als optisch relevante Baueinheit ausgegangen.

Dieses nicht dargestellte Lichtmodul ist von einem Tragrahmen 50 (siehe Figur 4) gehalten, welcher Tragrahmen 50 in dem Gehäuse 200 des Scheinwerfers, welches in Figur 1 gezeigt ist, um eine horizontale Achse H und um eine vertikale Achse V verschwenkbar gelagert ist.

Der Tragrahmen ist dabei um einen Fixpunkt 51 an dem oder in Bezug auf das Gehäuse 200 um die beiden Achsen V, H verschwenkbar gelagert.

Mit der erfindungsgemäßen Verstelleinrichtung 1 wird ein Verschwenken des Tragrahmens 50 um eine Achse, z.B. um eine horizontale Achse oder wie im vorliegenden Beispiel gezeigt um die vertikale Achse V möglich (der zweite Lagerpunkt, durch welchen die Vertikalachse V verläuft und der in der Regel kein Fixpunkt ist, ist in den Figuren nicht dargestellt).

Wie insbesondere den Figuren 1 - 3 entnommen werden kann, umfasst die Verstelleinrichtung ein Stellelement 2, das vorzugsweise als Stellstange ausgebildet ist, wobei das Stellelement 2 mit einem ersten Endbereich 2b gelenkig mit der optischen Baueinheit 100, d.h. mit dem Tragrahmen 50 verbunden ist.

An seinem zweiten Endbereich 2c ist das Stellelement 2 mit einer Antriebsvorrichtung 3 gekoppelt, und zwar derart, dass das Stellelement 2 mittels der Antriebsvorrichtung 3 um seine Längsachse 2a verdrehbar ist.

Die Antriebsvorrichtung 3, welche an dem Gehäuse 200 gelagert ist, ist manuell betätigbar und umfasst eine Einstellschraube 3a, deren Verdrehbewegung in bekannter Weise in eine Drehbewegung des Drehteils 3b umgesetzt wird. Das Drehteil 3b weist eine längliche Aufnahme 3b' auf, in welche das Stellelement 2 mit seinem Abschnitt 2c eingeschoben ist. Durch die Querschnitts-Ausgestaltung der Aufnahme 3b' und des entsprechend daran angepassten Abschnittes 2c des Stellelementes 2 kann dieses in seiner Längsrichtung verschoben werden, bei einer Drehbewegung des Drehteiles 3b wird das Stellelement 2 mit diesem mit verdreht.

Das Stellelement 2 weist einen Gewindeabschnitt 2d auf, mittels welchem das Stellelement 2 in einem Gegengewinde 4a um seine Längsachse 2a verdrehbar gelagert ist, wobei das Gegengewinde 4a in Bezug auf das Gehäuse 200 des Fahrzeugscheinwerfers feststehend angeordnet ist.

Weiters ist ein von dem Gehäuse 200 des Fahrzeugscheinwerfers getrennt ausgebildetes Führungselement 4 vorgesehen, welches mit dem Gehäuse 200 fix verbunden ist und beispielsweise mittels Schrauben 40 an dem Gehäuse 200 angeschraubt ist.

Das Führungselement 4 weist eine Führungsaufnahme 4b auf, in welcher das Lichtmodul 100 bzw. der Tragrahmen 50 mit seinem Lagerbereich 5 in Richtung der Längsachse 2a des Stellelementes 2 verschiebbar gelagert ist.

Der Lagerbereich 5 ist als von dem Lichtmodul und auch von dem Tragrahmen 50 getrenntes Lagerelement 5 ausgebildet, welches mit dem Lichtmodul 100, konkret mit dem Tragrahmen 50 fix verbindbar bzw. fix verbunden ist und mit dem Tragrahmen 50 beispielsweise verschraubt werden kann.

Das Lagerelement 5 weist einen Gelenksabschnitt 5a auf, mit welchem das Stellelement 2 mit seinem ersten Endbereich 2b gelenkig verbunden ist, außerdem ist das Gegengewinde 4a mit dem Führungselement 4 fest verbunden, vorzugsweise mit dem Führungselement 4 einstückig ausgestaltet.

Das Lagerelement 5 ist mit einem Außenbereich 5a' des Gelenksabschnittes 5a in der Führungsaufnahme 4b verschiebbar gelagert, wobei vorzugsweise die Führungsaufnahme 4b Gleitflächen 4b' aufweist, an welchen der Außenbereich 5a' des Gelenksabschnittes 5a des Lagerelementes 5 gleitend gelagert ist. Dabei sind zumindest zwei Gleitflächen 4b', eine Gleitfläche an einem oberen Bereich in der Führungsaufnahme 4b und eine Gleitfläche 4b' an einem unteren Bereich in der Führungsaufnahme 4b, vorgesehen. Mit diesen Gleitflächen erfolgt eine Lagerung des Lagerbereiches und somit der optisch relevanten Baueinheit in z-Richtung, d.h. in vertikaler Richtung.

Bei einem Verdrehen des Stellelementes 2 mittels der Antriebsvorrichtung 3 erzeugen Gewinde 2d und Gegengewinde 4a eine Axialverschiebung des Stellelementes 2 in Richtung seiner Achse 2a, wodurch auch der Tragrahmen 50 entsprechend verschoben und somit um die Vertikalachse V verschwenkt wird.

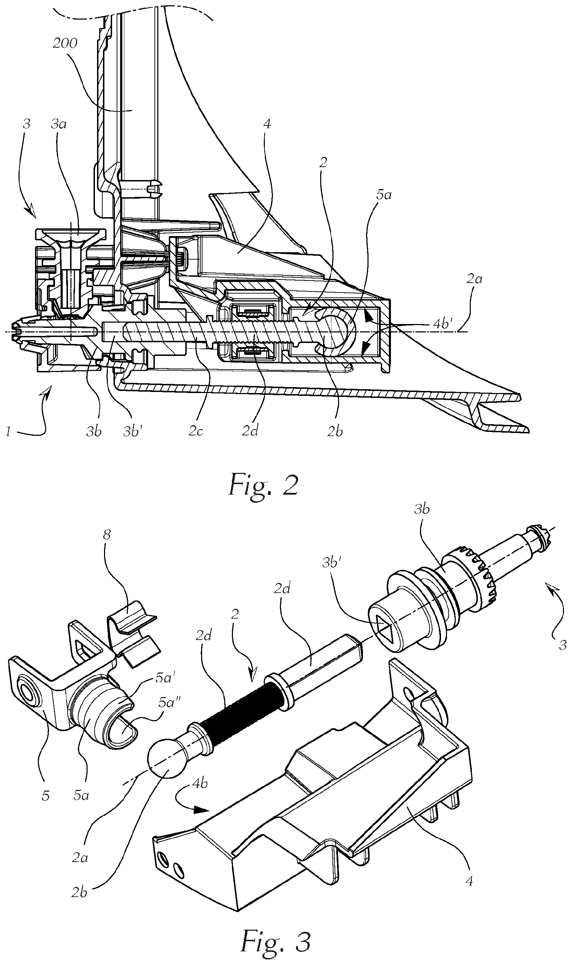

Weiters ist es von Vorteil, wenn das Gegengewinde 4a elastisch ausgebildet ist. Vorzugsweise ist dabei zumindest oder ausschließlich in Richtung quer zu der Längsachse 2a elastisch ausgebildet ist. Auf diese Weise kann die lineare Stellkraft begrenzt werden. Wird das auftretende Drehmoment zu hoch, so gibt das elastische Gegengewinde 4a nach. Dazu ist z.B. eine Klammer 8 (siehe Figur 3) vorgesehen, durch welche das Höchstdrehmoment festgelegt und die Stellstange 2 im Gegengewinde 4a gehalten wird.

Mit der Klammer 8 wird das Gegengewinde 4a in Richtung der Längsachse 2a auf das Gewinde 2d des Stellelementes 2 gedrückt. Bei Überschreiten eines bestimmten Drehmomentes wird das Gegengewinde 4a gegen die Kraft der Klammer 8 auseinander gedrückt, so dass das Stellelement durchdreht, ohne sich in Längsrichtung zu bewegen.

Der erste Endbereich 2b des Stellelementes 2 ist als Kugelkopf ausgebildet, und der Gelenksabschnitt 5a des Lagerbereiches 5 weist eine kugelförmige Aufnahme 5a" auf, welche eine an die Form des Kugelkopfes des ersten Endbereiches 2b angepasste Form aufweist. Der erste Endbereich 2b ist in die kugelförmige Aufnahme 5a" eingesetzt, beispielsweise in der Aufnahme 5a" gelenkig verrastet ist.

Mit der Erfindung ergeben sich eine Reihe von Vorteilen:
- nachdem kein Gleitelement, welches in dem Gehäuse verschiebbar ist, vorgesehen ist, kann dieses nicht mehr verkippen;
- die Kraft des Stellelementes kann direkt in der Verschwenkachse durch den Verstellpunkt angreifen;
- das gesamte Gewicht des Tragrahmens inklusive der zumindest einen optisch relevanten Baueinheit wird im Führungselement aufgenommen und nicht mehr in einem Gleitelement und Gleitbahnen an dem Gehäuse;
- die Gleitflächen des Führungselementes können werkzeugtechnisch einfacher abgestimmt werden, da das Werkzeug klein und einfach ausgestaltet ist und nicht mehr im Gehäusewerkzeug integriert ist;
- das Gehäusewerkzeug kann einfacher ausgestaltet werden, da keine Gleitbahnen im Gehäuse mehr notwendig sind und nur mehr zwei Aufnahmepunkte für das Führungselement vorgesehen sein müssen;
- das Material für das Führungselement und für die Führungsbahnen kann unabhängig von Gehäusematerial gewählt werden, sodass bessere Gleiteigenschaften erzielt werden können;
- dadurch, dass nicht nur das Stützelemente sondern auch die Stange über den die Axialbewegung erzeugenden Gewindeabschnitt in dem Führungselement gelagert sind, wird eine genauere Ausrichtung dieser beiden Bauteile zueinander möglich, da das Gehäuse aus der Toleranzkette herausfällt Dies ist insbesondere deshalb von Vorteil, da Gehäuse durch ihre Komplexität naturgemäß anfälliger für Verzug sind, anspruchsvoller mit anderen Bauteilen abzustimmen sind und etwaige Änderungen sich aufwändiger und teuer gestalten;
- es entsteht keine Biegebelastung des Stellelementes, da dieses nicht im Gehäuse gelagert ist.

## Patentansprüche

1. Fahrzeugscheinwerfer, insbesondere Kraftfahrzeugscheinwerfer, mit einer Verstelleinrichtung (1) zum Verstellen, beispielsweise zum Verschwenken, von zumindest einer optisch relevanten Baueinheit (100) des Fahrzeugscheinwerfers, welche optisch relevante Baueinheit (100) beispielsweise eine Leuchteinheit bzw. ein Lichtmodul ist oder zumindest eine Leuchteinheit oder ein Lichtmodul umfasst, und wobei die Verstelleinrichtung (1) ein Stellelement (2) und eine Antriebsvorrichtung (3) umfasst, wobei das Stellelement (2) mit einem ersten Endbereich (2b) gelenkig mit der optischen Baueinheit (100) verbunden ist, und wobei an seinem zweiten Endbereich (2c) das Stellelement (2) mit der Antriebsvorrichtung (3) gekoppelt ist, derart, dass das Stellelement (2) mittels der Antriebsvorrichtung (3) um seine Längsachse (2a) verdrehbar ist und entlang seiner Längsachse (2a) längsverschiebbar gelagert ist, wobei das Stellelement (2) einen Gewindeabschnitt (2d) aufweist, mittels welchem das Stellelement (2) in einem Gegengewinde (4a) um seine Längsachse (2a) verdrehbar gelagert ist, wobei das Gegengewinde (4a) in Bezug auf ein Gehäuse (200) des Fahrzeugscheinwerfers feststehend angeordnet ist, wobei die Antriebsvorrichtung (3) an dem Gehäuse (200) des Fahrzeugscheinwerfers gelagert ist, wobei die Verstelleinrichtung (1) ein von dem Gehäuse (200) des Fahrzeugscheinwerfers getrennt ausgebildetes Führungselement (4) umfasst, wobei das Führungselement (4) mit dem Gehäuse (200) fix verbunden ist, und wobei das Gegengewinde (4a) mit dem Führungselement (4) fest verbunden ist,
**dadurch gekennzeichnet, dass**
das Führungselement (4) eine Führungsaufnahme (4b) aufweist, in welcher Führungsaufnahme (4b) die zumindest eine optisch relevante Baueinheit (100) mit einem Lagerbereich (5) in Richtung der Längsachse (2a) des Stellelementes (2) verschiebbar gelagert ist, und wobei der Lagerbereich (5) einen Gelenksabschnitt (5a) aufweist, mit welchem das Stellelement (2) mit seinem ersten Endbereich (2b) gelenkig verbunden ist.

2. Fahrzeugscheinwerfer nach Anspruch 1, **dadurch gekennzeichnet, dass** der Lagerbereich (5) mit einem Außenbereich (5a') des Gelenksabschnittes (5a) in der Führungsaufnahmen (4b) verschiebbar gelagert ist.

3. Fahrzeugscheinwerfer nach Anspruch 1 oder 2, **dadurch gekennzeichnet, dass** das Gegengewinde (4a) mit dem Führungselement (4) einstückig ausgebildet ist.

4. Fahrzeugscheinwerfer nach einem der Ansprüche 1 bis 3, **dadurch gekennzeichnet, dass** der Lagerbereich (5) als von der optischen Baueinheit (100) getrenntes Lagerelement (5) ausgebildet ist, welches mit der optischen Baueinheit (100) fix verbindbar bzw. fix verbunden ist.

5. Fahrzeugscheinwerfer nach einem der Ansprüche 1 bis 4, **dadurch gekennzeichnet, dass** das Stellelement (2) als Stellstange ausgebildet ist.

6. Fahrzeugscheinwerfer nach einem der Ansprüche 1 bis 5, **dadurch gekennzeichnet, dass** das Gegengewinde (4a) elastisch, vorzugsweise zumindest in Richtung quer zu der Längsachse (2a) elastisch ausgebildet ist.

7. Fahrzeugscheinwerfer nach einem der Ansprüche 1 bis 6, **dadurch gekennzeichnet, dass** der erste Endbereich (2b) als Kugelkopf ausgebildet ist, und der Gelenksabschnitt (5a) des Lagerbereiches (5) eine kugelförmige Aufnahme (5a"), an die Form des Kugelkopfes des ersten Endbereiches (2b) angepasste Form aufweist, und der erste Endbereich (2b) in die kugelförmige Aufnahme (5a") eingesetzt, beispielsweise in der Aufnahme (5a") gelenkig und verschieblich verrastet ist.

8. Fahrzeugscheinwerfer nach einem der Ansprüche 1 bis 7, **dadurch gekennzeichnet, dass** die Führungsaufnahme (4b) ein oder mehrere Gleitflächen (4b') aufweist, an welchen der Lagerbereich (5), vorzugsweise der Außenbereich (5a') des Gelenksabschnittes (5a) gleitend gelagert ist.

9. Fahrzeugscheinwerfer nach Anspruch 8, **dadurch gekennzeichnet, dass** zumindest zwei Gleitflächen (4b'), eine Gleitfläche an einem oberen Bereich in der Führungsaufnahme (4b) und eine Gleitfläche (4b') an einem unteren Bereich in der Führungsaufnahme (4b), vorgesehen sind.

10. Fahrzeugscheinwerfer nach einem der Ansprüche 1 bis 9, **dadurch gekennzeichnet, dass** die Antriebsvorrichtung (3) manuell betätigbar ist.

11. Fahrzeugscheinwerfer nach einem der Ansprüche 1 bis 10, **dadurch gekennzeichnet, dass** die zumindest eine optisch relevante Baueinheit (100) in einem Tragrahmen (50) angeordnet ist, welcher Tragrahmen (50) um eine Verschwenkachse (50) verschwenkbar gelagert ist, und wobei der Lagerbereich (5) mit dem Tragrahmen (50) außerhalb der Verschwenkachse fix verbunden oder mit diesem einstückig ausgebildet ist.

12. Fahrzeugscheinwerfer nach Anspruch 11, **dadurch gekennzeichnet, dass** an dem Tragrahmen (50) zwei oder mehrere optische relevante Baueinheiten (100) angeordnet sind.

13. Fahrzeugscheinwerfer nach Anspruch 11 oder 12, **dadurch gekennzeichnet, dass** die zumindest eine optisch relevante Baueinheit (100) als Leuchteinheit bzw. Lichtmodul ausgebildet ist.

## Claims

1. Vehicle headlamp, in particular motor vehicle headlamp, comprising an adjusting device (1) for adjusting, for example for pivoting, at least one optically relevant unit (100) of the vehicle headlamp, which optically relevant unit (100), for example, is a lighting unit or a light module or comprises at least one light unit or light module, and wherein the adjusting device (1) comprises an actuating element (2) and a driving device (3), wherein the actuating element (2) is, with a first end portion (2b), articulately connected to the optical unit (100), and wherein the actuating element (2), at a second end portion (2c) thereof, is coupled to the driving device (3) in such a manner in that the actuating element (2) is rotatable about its longitudinal axis (2a) by means of the driving device (3) and is mounted longitudinally displaceable along its longitudinal axis (2a), wherein the actuating element (2) comprises a threaded section (2d) by means of which the actuating element (2) is mounted rotatable about its longitudinal axis (2a) within in a mating thread (4a), the mating thread (4a) being arranged fixed with respect to a housing (200) of the vehicle headlight, wherein the driving device (3) is mounted at the housing (200) of the vehicle headlamp, wherein the adjustment device (1) comprises a guide element (4) separate from the housing (200) of the vehicle headlamp, the guide element (4) being fixedly connected to the housing (200), and wherein the mating thread (4a) is fixedly connected to the guide element (4),
**characterised in that**
the guide element (4) includes a guide receptacle (4b), in which guide receptacle (4b) the at least one optically relevant unit (100) is mounted with a bearing region (5) being displaceable in the direction of the longitudinal axis (2a) of the actuating element (2), and the bearing region (5) having a articulation section (5a), with which the actuating element (2) is connected in an articulated manner to its first end region (2b).

2. Vehicle headlamp according to claim 1, **characterised in that** the bearing region (5) is mounted displaceable in the guide receptacle (4b) with an outer region (5a') of the articulation section (5a).

3. Vehicle headlamp according to claim 1 or 2, **characterised in that** the mating thread (4a) is formed integrally with the guide element (4).

4. Vehicle headlamp according to any one of claims 1 to 3, **characterised in that** the bearing region (5) is realized as a bearing element (5) separate from the optical unit (100), which is fixedly connectable or fixedly connected to the optical unit (100).

5. Vehicle headlamp according to one of Claims 1 to 4, **characterised in that** the actuating element (2) is designed as an actuating rod.

6. Vehicle headlamp according to any one of claims 1 to 5, **characterised in that** the mating thread (4a) is realized elastic, preferably elastic at least in a direction transverse to the longitudinal axis (2a).

7. Vehicle headlamp according to any one of the claims 1 to 6, **characterised in that** the first end region (2b) is realized as a spherical head, and the articulation section (5a) of the bearing region (5) includes a spherical receptacle (5a"), shape adapted to the shape of the spherical head of the first end region (2b), and the first end region (2b) is inserted into the spherical receptacle (5a"), for example locked in the receptacle (5a") in an articulated and displaceable manner.

8. Vehicle headlamp according to any one of claims 1 to 7, **characterised in that** the guide receptacle (4b) has one or more sliding surfaces (4b') at which the bearing region (5), preferably the outward region (5a') of the articulation section (5a), is slidably mounted.

9. Vehicle headlamp according to claim 8, **characterised in that** at least two sliding surfaces (4b'), one sliding surface at an upper region in the guide receptacle (4b) and one sliding surface (4b') at a lower region in the guide receptacle (4b), are provided.

10. Vehicle headlamp according to any one of claims 1 to 9, **characterised in that** the driving device (3) is operable manually.

11. Vehicle headlamp according to one of claims 1 to 10, **characterised in that** the at least one optically relevant unit (100) is arranged within a supporting frame (50), which supporting frame (50) is mounted pivotable about a pivot axis (50), and wherein the bearing region (5) is fixed to the supporting frame (50) outside the pivot axis or being formed integrally therewith.

12. Vehicle headlamp according to claim 11, **characterised in that** two or more optically relevant units (100) are arranged on the supporting frame (50).

13. Vehicle headlamp according to claim 11 or 12, **characterised in that** the at least one optically relevant component unit (100) is designed as a lighting unit or light module.

## Revendications

1. Projecteur de véhicule, en particulier projecteur de véhicule automobile, avec un dispositif de réglage (1) pour le réglage, par exemple en pivotant, d'au moins une unité optiquement importante (100) du projecteur de véhicule, laquelle unité optiquement importante (100) est par exemple une unité d'éclairage ou un module de lumière ou comprend au moins une unité d'éclairage ou un module d'éclairage, et le dispositif de réglage (1) comportant un élément de réglage (2) et un dispositif d'entraînement (3), ledit élément de réglage (2) étant relié de manière articulée à l'unité optique (100) par une première zone d'extrémité (2b), et l'élément de réglage (2) étant couplé au dispositif d'entraînement (3) au niveau de sa deuxième zone d'extrémité (2c) de telle sorte que l'élément de réglage (2) puisse pivoter autour de son axe longitudinal (2a) au moyen du dispositif d'entraînement (3) et soit monté déplaçable longitudinalement le long de son axe longitudinal (2a), l'élément d'actionnement (2) comportant une section filetée (2d) au moyen de laquelle l'élément d'actionnement (2) est monté pivotable autour de son axe longitudinal (2a) dans un contre-filet (4a), le contre-filet (4a) étant disposé fixe par rapport à un boîtier (200) du projecteur de véhicule, le dispositif d'entraînement (3) étant monté sur le boîtier (200) du projecteur de véhicule, le dispositif de réglage (1) comprenant un élément de guidage (4) qui est formé séparément du boîtier (200) du projecteur de véhicule, ledit élément de guidage (4) étant fixé au boîtier (200) et ledit contre-filet (4a) étant relié de manière fixe à l'élément de guidage (4),
**caractérisé en ce que**
l'élément de guidage (4) comporte un logement de guidage (4b), dans lequel ladite au moins une unité optiquement importante (100) est montée avec une zone de palier (5) déplaçable dans la direction de l'axe longitudinal (2a) de l'élément d'actionnement (2), et la zone de palier (5) comportant une région d'articulation (5a) avec laquelle l'élément d'actionnement (2) est relié de manière articulée à sa première zone d'extrémité (2b).

2. Projecteur de véhicule selon la revendication 1, **caractérisé en ce que** la zone de palier (5) est montée de façon déplaçable avec une zone extérieure (5a') de la région d'articulation (5a) dans le logement de guidage (4b).

3. Projecteur de véhicule selon la revendication 1 ou 2, **caractérisé en ce que** le contre-filet (4a) est formé d'un seul tenant avec l'élément de guidage (4).

4. Projecteur de véhicule selon l'une quelconque des revendications 1 à 3, **caractérisé en ce que** la zone de palier (5) est conçue comme élément de palier (5) qui est séparé de l'unité optique (100) et qui peut être ou est relié de manière fixe à l'unité optique (100).

5. Projecteur de véhicule selon l'une quelconque des revendications 1 à 4, **caractérisé en ce que** l'élément de réglage (2) est conçu comme tige de réglage.

6. Projecteur de véhicule selon l'une quelconque des revendications 1 à 5, **caractérisé en ce que** le contre-filet (4a) est élastique, de préférence conçu élastique au moins dans une direction transversale à l'axe longitudinal (2a).

7. Projecteur de véhicule selon l'une quelconque des revendications 1 à 6, **caractérisé en ce que** la première zone d'extrémité (2b) est réalisée sous la forme d'une tête sphérique, et la région d'articulation (5a) de la zone de palier (5) comprend un logement sphérique (5a") adapté à la forme de la tête sphérique de la première zone d'extrémité (2b), et la première zone d'extrémité (2b) est insérée dans le logement sphérique (5a"), par exemple est verrouillée de manière articulée et déplaçable dans le logement (5a").

8. Projecteur de véhicule selon l'une quelconque des revendications 1 à 7, **caractérisé en ce que** le logement de guidage (4b) comprend une ou plusieurs surfaces de glissement (4b') sur lesquelles la zone de palier (5), de préférence la zone extérieure (5a') de la région d'articulation (5a), est montée coulissante.

9. Projecteur de véhicule selon la revendication 8, **caractérisé en ce qu'**au moins deux surfaces de glissement (4b') sont prévues, une surface de glissement dans une zone supérieure du logement de guidage (4b) et une surface de glissement (4b') dans une zone inférieure du logement de guidage (4b).

10. Projecteur de véhicule selon l'une quelconque des revendications 1 à 9, **caractérisé en ce que** le dispositif d'entraînement (3) est actionnable manuellement.

11. Projecteur de véhicule selon l'une des revendications 1 à 10, **caractérisé en ce que** ladite au moins une unité optiquement importante (100) est disposée dans un cadre porteur (50), ledit cadre porteur (50) étant monté pivotable autour d'un axe de pivotement (50) et la zone de palier (5) étant fixé au cadre porteur (50) en dehors de l'axe de pivotement ou étant formée d'un seul tenant avec celui-ci.

12. Projecteur de véhicule selon la revendication 11, **caractérisé en ce que** deux ou plusieurs unités optiquement importantes (100) sont disposées sur le cadre de support (50).

13. Projecteur de véhicule selon la revendication 11 ou 12, **caractérisé en ce que** ladite au moins un composant optiquement pertinent (100) est conçu comme unité d'éclairage ou module de lumière.
